# EUROPEAN PATENT APPLICATION

(11) **EP 4 513 408 A1**
(43) Date of publication of application: **26.02.2025**
(21) Application number: 24183816.8
(22) Date of filing: 21.06.2024
(51) Int. Cl.: G06Q 20/20, G07G 1/00, G07G 1/14

(54) **MOBILE TERMINAL, METHOD, AND MEDIUM**

(30) Priority: 25.08.2023 JP 2023137347
(71) Applicant: Toshiba TEC Kabushiki Kaisha, Tokyo 141-8562 (JP)
(72) Inventor: Kawaida, Yuusuke, Tokyo, 141-8562 (JP)
(74) Representative: Bandpay & Greuter

(57) **Abstract**

A mobile terminal for obtaining and temporarily storing information about an item to be purchased before the item is registered using a point of sale (POS) terminal, includes a memory, a scanner, a display, a printer, and a processor configured to: control the scanner to scan a first symbol and obtain an item code from the first symbol, store, in the memory, item information indicating an item corresponding to the obtained item code, generate a second symbol indicating the stored item information and readable by the POS terminal, and control the display or the printer to output the second symbol.

## Description

### FIELD

Embodiments described herein relate generally to a mobile terminal, a method, and a medium.

### BACKGROUND

In mobile sales where a point of sale (POS) terminal cannot be used, an item registration is performed using a handy terminal that does not have a network-based communication function. In such a case, the operation for registering items is manually performed later using the POS terminal based on the sales receipt printed by the handy terminal.

In such operations, the item registration operation for sales and item registration operation for registering with the POS terminal are required, and a double burden is imposed on the worker.

Therefore, there is a need for a technique for simplifying migration operations of the item registration data from an electronic equipment storing the item registration data to another electronic equipment.

### SUMMARY OF THE INVENTION

Embodiments of the present disclosure provide a technique capable of assisting simplification of item registration data migration operations.

In one embodiment, a mobile terminal for obtaining and temporarily storing information about an item to be purchased before the item is registered using a point of sale (POS) terminal, comprises: a memory; a scanner; a display; a printer; and a processor configured to: control the scanner to scan a first symbol and obtain an item code from the first symbol, store, in the memory, item information indicating an item corresponding to the obtained item code, generate a second symbol indicating the stored item information and readable by the POS terminal, and control the display or the printer to output the second symbol.

### DISCLOSURE OF THE INVENTION

To this end, a mobile terminal, a method performed by a mobile and a non-transitory computer readable medium according to the appended claims are provided.

### BRIEF DESCRIPTION OF THE DRAWINGS

FIG. 1 is a block diagram illustrating a handy terminal according to an embodiment.
FIG. 2 is a diagram illustrating a code symbol output by the handy terminal.
FIG. 3 is a flowchart of a process of managing a transaction file performed by the handy terminal.
FIG. 4 is a flowchart of a code symbol processing performed by the handy terminal.

### DETAILED DESCRIPTION

Hereinafter, embodiments will be described in detail with reference to the drawings. In the drawings used in the description of the following embodiments, the scale of each part may be changed as appropriate. In addition, in the drawings used in the description of the following embodiments, configurations may be omitted in some cases.

In the following, an example of a mobile sales store that sells items in automobiles, etc., will be described. The item may include not only a tangible item, but also an item that differs from the tangible item such as a ticket and a service to be provided for a customer. The store may be a store that mainly sells tangible items, or may be a store that mainly provide services. For example, a store is a mobile sales vehicle that sells foods, drinks, general merchandise, or the like.

An item transaction or sales transaction is an exchange of a service or an item and its price between a store and a customer. The item transaction includes, from the point of view of the store, the sales of items. The transaction, from customer perspective, includes purchasing items.

### (Configuration Example)

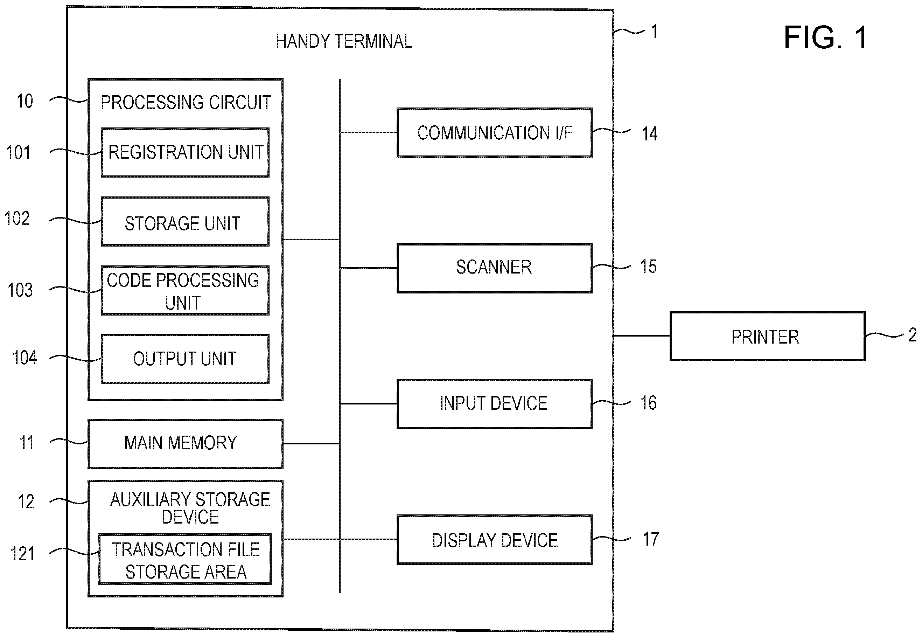

FIG. 1 is a block diagram illustrating a handy terminal 1 according to an embodiment.

The handy terminal 1 is an electronic equipment carried by a store clerk of a mobile sales vehicle X. The handy terminal 1 has a limited communication function using a wired or wireless network, e.g., the Internet, a mobile communication network, a local area network (LAN), etc. For example, the handy terminal 1 cannot access such a network at least when it is being used by a store clerk at a store. In other words, the handy terminal 1 operates as a standalone mobile terminal at a store.

The handy terminal 1 is a device that processes item transactions in the mobile sales vehicle X. For example, the handy terminal 1 has an item registration function. The handy terminal 1 performs item registration for one or more items that will be the target of the item transaction through its item registration function. An item that is a target of the transaction is also referred to as a transaction target item. The item registration is to register an item as a transaction target item. For example, the item registration includes adding data about a transaction target item to a transaction file. Data related to the transaction target item is referred to as transaction item data. The transaction file may include transaction item data for each transaction target item for one transaction. A transaction file is also referred to as transaction data. The transaction item data may include a transaction number. The transaction number is an identifying information that can uniquely identify a transaction. The transaction item data may include the item code of a transaction target item. The transaction target item's item code is identifying information that can uniquely identify the transaction target item. The transaction item data may include the number of the transaction target items in one transaction. The transaction item data may include a price of each transaction target item.

The handy terminal 1 may have a payment function. In this case, the handy terminal 1 processes the payment of the transaction based on the transaction data via a payment processing terminal connected to the handy terminal 1. The payment is a payment for the transaction. For example, the payment may be a payment using cash and voucher, credit card payment, electronic money payment, debit card payment, and code payment.

The handy terminal 1 is directly connected to a printer 2 by wire or wirelessly. The handy terminal 1 and the printer 2 may be connected by, for example, a Bluetooth^{™}.

The printer 2 is an electronic equipment carried by a store clerk of the mobile sales vehicle X together with the handy terminal 1. The printer 2 is a device for issuing a transaction statement and a code symbol by printing on a medium. For example, the medium is paper. For example, the printer 2 is a thermal printer, an inkjet printer, or the like. The transaction statement is a medium indicating transaction details. Hereinafter the transaction statement is described as a receipt, and it may have an address field. For example, the printer 2 prints an image on the medium based on print data received from the handy terminal 1.

For example, the transaction statement includes all or part of information for the store where the transaction was conducted, information indicating the transaction date and time, and transaction information. The transaction statement may include information other than these information, e.g., information indicating the store where the transaction occurred including the name of the store. The information indicating the store where the transaction occurred may include information other than this information. The information indicating the transaction date and time may include information other than the date and time.

For example, the transaction information includes the transaction item data for each transaction target item. The transaction item data includes all or part of target item's item code, the name of the transaction target item, the prices of the transaction target item, the scores of the transaction target item, and amount of the transaction target item. The transaction item data may include information other than these information.

The transaction information may include the total amount of the transaction. The transaction information may include a discount applicable amount. The transaction information may include a discount amount. The transaction information may include a billing amount. The transaction information may include a payment amount. The payment amount is the amount of payment for a transaction paid by the customer's chosen payment method. The payment amount is the same amount as the billing amount.

A code symbol indicates a two-dimensional code such as QR Code^{™}. The code symbol represents the data of the transaction file stored in the handy terminal 1. The data stored in the code symbol includes transaction item data for each transaction target item.

A configuration example of the handy terminal 1 will be described.

The handy terminal 1 includes a processing circuit 10, a main memory 11, an auxiliary storage device 12, a communication interface 14, a scanner 15, an input device 16, and a display device 17. The main memory 11, the auxiliary storage device 12, the communication interface 14, the scanner 15, the input device 16, and the display device 17 are connected to each other so that signals can be input and output therebetween. In FIG. 1, an interface is described as "I/F".

The processing circuit 10 functions as a core component of the handy terminal 1. The processing circuit 10 includes one or more circuits that execute a plurality of processes with a plurality of functions. For example, the circuit may be, but is not limited to, a processor, an application specific integrated circuit (ASIC), or a field programmable gate array (FPGA). For example, the processor is a central processing unit (CPU) or a graphics processing unit (GPU). The processing circuit 10 loads a program stored in the auxiliary storage device 12 to the main memory 11. The program allows the processing circuit 10 to execute processing by the respective units described later. The processing circuit 10 executes the program loaded in the main memory 11, thereby enabling various processing to be executed.

The main memory 11 includes a non-volatile memory area and a volatile memory area. The non-volatile memory area of the main memory 11 stores an operating system and/or programs. The volatile memory area is used as a work area in which data is appropriately rewritten by the processing circuit 10. For example, the non-volatile memory area includes a read only memory (ROM). For example, the volatile memory area includes a random access memory (RAM).

The auxiliary storage device 12 includes one or more storage devices. The storage device may be, but is not limited to, an electric erasable programmable read-only memory (EEPROM^{™}), a hard disc drive (HDD), a solid state drive (SSD), or a flash memory. The auxiliary storage device 12 stores the program described above, data used by the processing circuit 10 in performing various kinds of processing, and data generated by the processing in the processing circuit 10.

The auxiliary storage device 12 includes a transaction file storage area 121. The transaction file storage area 121 stores the transaction file. The data of the transaction file storage area 121 is updated by adding, updating, or deleting the transaction item data.

The communication interface 14 includes various interface circuits that connect the handy terminal 1 to other devices so as to be able to directly communicate with each other by wire or wirelessly according to predetermined communication protocols.

The scanner 15 is a device that reads various code symbols and obtains information from the code symbols. For example, the code symbol may be a barcode symbol or a two-dimensional code symbol. The code symbol may include a code symbol of an item indicating its item code. The code symbol of the item is an image attached to the item. The code symbol may include a code symbol indicating a membership code. The membership code is identifying information that uniquely identifies a member or a registered customer. The code symbol for the membership code may be an image attached to a membership card or an image that can be displayed on a customer's terminal. The code symbol may include a code symbol for a code payment.

The input device 16 is a device capable of inputting information to the handy terminal 1. For example, the input device 16 may include a keyboard. The input device 16 may be a touch screen of the display device 17.

The display device 17 is a device capable of displaying various images under the control of the processing circuit 10. The display device 17 is mainly a display device for a store clerk for viewing by a store clerk. For example, the display device 17 may be a liquid crystal display (LCD) or an electroluminescence (EL) display.

The hardware configuration of the handy terminal 1 is not limited to the above-described configuration. The handy terminal 1 allows omission and modification of the above-mentioned configuration element and addition of a new configuration element as appropriate.

Description will be given of each function performed by the processing circuit 10.

The processing circuit 10 performs the functions of a registration unit 101, a storage unit 102, a code processing unit 103, and an output unit 104. Those units can be performed by a controller including the processing circuit 10 and the main memory 11.

The registration unit 101 processes the registration of one or more transaction target items.

The storage unit 102 manages a transaction file in the handy terminal 1. The storage unit 102 stores the transaction item data in a transaction file. The storage unit 102 updates the transaction file.

The code processing circuit 103 performs a process of generating a code symbol.

The output unit 104 outputs print data based on the transaction statement. The output unit 104 outputs data based on a code symbol. The data based on the code symbol is also referred to as code symbol information. The code symbol information includes print data based on the code symbol. The code symbol information includes display data based on the code symbol. The output unit 104 controls the printer 2 to output the print data. The output unit 104 controls the display device 17 to output the display data.

### (Code Symbol Example)

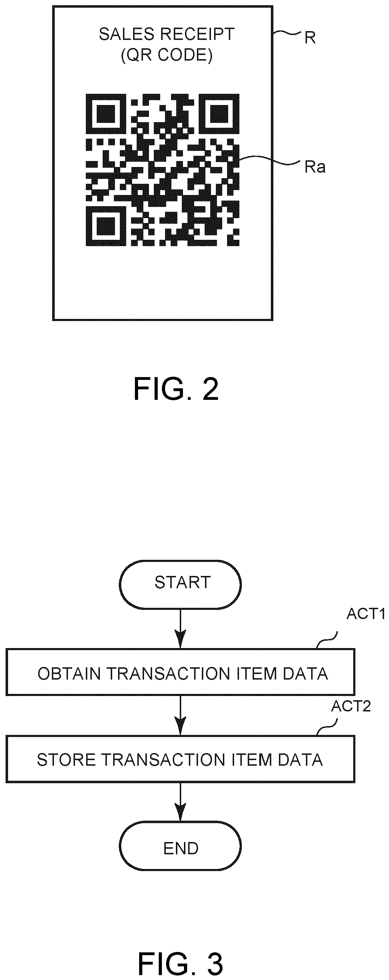

FIG. 2 is a diagram illustrating a code symbol output by the handy terminal 1 according to an embodiment.

FIG. 2 is a diagram illustrating a receipt R including a code symbol.

The receipt R includes a code symbol area Ra. The code symbol area Ra includes a code symbol. The code symbol is, for example, a QR Code^{™}. The code symbol represents the transaction item data. The code symbol represents some or all of the data of the transaction file stored in the transaction file storage area 121 of the handy terminal 1. The code symbol may be any size.

The receipt R includes at least one code symbol. When the receipt R is issued for each code symbol, a plurality of receipts R may be issued.

The receipt R may include identifying information capable of identifying the handy terminal 1. The receipt R may include information for the transaction date and time. Information regarding the transaction date and time may indicate when the receipt R was issued.

The user of the handy terminal 1 operates a POS terminal to read the code symbol printed on the receipt R. For example, the user uses a scanner or the like connected to the POS terminal to read the code symbol . In this way, the user can enter the transaction item data in the POS terminal or the like. The POS terminal or the like acquires the transaction item data included in code symbol. Therefore, the user does not need to manually register items using the POS terminal or the like. In this way, the handy terminal 1 can simplify the migration operations of the item registration data. The user can simplify the migration operations of the item registration data.

The code symbol illustrated in FIG. 2 may be displayed on the display device 17 of the handy terminal 1. For example, the handy terminal 1 displays a display image including a code symbol on the display device 17. The displayed image may include identification information capable of identifying the handy terminal 1. The displayed image may include information for a transaction date and time.

Note that the code symbol to be read is not limited to QR Code^{™}.

### (Operation Example)

Processing by the handy terminal 1 will be described.

FIG. 3 is a flowchart illustrating a process of managing a transaction file by the processing circuit 10 of the handy terminal 1 according to an embodiment.

The processing circuit 10 can execute the processing illustrated in FIG. 3 each time an item registration is performed by the handy terminal 1. The processing circuit 10 may execute the processing illustrated in FIG. 3 for each transaction.

The processing circuit 10 obtains transaction item data (ACT1). ACT1 may be performed by the registration unit 101. In ACT 1, for example, the processing circuit 10 obtains the item code of the transaction target item based on the reading of the code symbol of the transaction target item by the scanner 15. The processing circuit 10 may obtain the item code of the transaction target item based on the transaction target item information that is input using the input device 16. The processing circuit 10 may obtain information indicating the number of the transaction target items. The processing circuit 10 may obtain information indicating the number of the transaction target items based on the scanner 15 reading the code symbol of the transaction target item. The processing circuit 10 may obtain information indicating the number of the transaction target items based on the number input by the user. The processing circuit 10 may obtain information indicating the price of the transaction target item. The processing circuit 10 may obtain information such as the item name of the transaction target item based on the item code of the transaction target item.

The processing circuit 10 stores the transaction item data in the auxiliary storage device 12 (ACT2). ACT2 may be performed by the storage unit 102. In ACT2, for example, the processing circuit 10 adds the transaction item data to the transaction file each time it obtains the transaction item data. The processing circuit 10 stores the transaction number and item data in a transaction file in association.

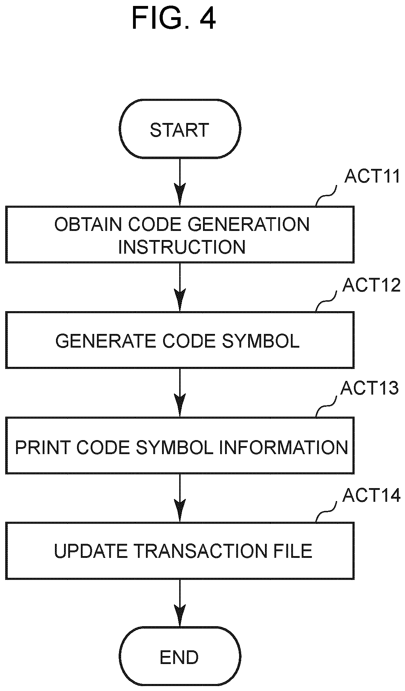

FIG. 4 is a flowchart illustrating a process of a code symbol performed by the processing circuit 10 of the handy terminal 1 according to an embodiment.

The processing circuit 10 obtains a code generation instruction (ACT11). ACT11 may be performed by the code processing circuit 103. In ACT11, for example, the processing circuit 10 obtains the code generation instruction based on the user's entry operation via the input device 16.

The processing circuit 10 generates a code symbol based on the transaction item data (ACT12). ACT12 may be processed by the code processing circuit 103. In ACT12, for example, the processing circuit 10 obtains the transaction file from the transaction file storage area 121 based on code generation instruction. The processing circuit 10 generates a code symbol by encoding data of the transaction file. The processing circuit 10 generates one or more code symbols depending on the data size of the transaction file.

The processing circuit 10 outputs code symbol information (ACT13). ACT13 may be performed by the output unit 104. In ACT13, for example, the processing circuit 10 may provide code symbol information indicative of at least one code symbol. In one embodiment, the processing circuit 10 provides the code symbol information to the printer 2. The processing circuit 10 controls the printer 2 to output image information including the code symbol. The image information may be print data. The printer 2 prints a receipt including the code symbol based on the image information including the code symbol. In another embodiment, the processing circuit 10 controls the display device 17 to display code symbol information. The processing circuit 10 controls the display device 17 to output the image information including the code symbol. The image information may be display data. The display device 17 displays an image based on the image information including the code symbol on the display device 17.

In one embodiment, the user operates a POS terminal or the like to read the code symbol included in the receipt printed by the printer 2. Accordingly, the user can enter the transaction item data in the POS terminal or the like based on the code symbol. The POS terminal or the like acquires the transaction item data included in the code symbol. Therefore, the user does not need to manually register the item in the POS terminal or the like. In this way, the handy terminal 1 can simplify the migration operations of the item registration data. The user can simplify the migration operations of the item registration data.

In another embodiment, the user operates the POS terminal or the like to read the code symbol included in an image displayed on the display device 17. Accordingly, the user can enter the transaction item data in the POS terminal or the like based on the code symbol. The POS terminal or the like acquires the transaction item data included in the code symbol. Therefore, the user does not need to manually register the item in the POS terminal or the like. In this way, the handy terminal 1 can simplify the migration work of the item registration data. The user can simplify the migration work of the item registration data.

The processing circuit 10 updates the transaction file (ACT14). ACT14 may be performed by the storage unit 102. In ACT 14, for example, after outputting the code symbol information, the processing circuit 10 deletes the transaction item data corresponding to the code symbol information from the transaction file. In one instance, the processing circuit 10 deletes the transaction item data from the transaction file based on a user action. In another embodiment, the processing circuit 10 deletes the transaction item data from the transaction file by outputting the code symbol information.

According to the process described above, each time the code symbol information is output, the processing circuit 10 may delete the corresponding transaction item data from the transaction file. Accordingly, the processing circuit 10 can secure the capacitance of the auxiliary storage device 12.

### (Modification)

A modification of the above-described embodiments will be described.

In the above description, the handy terminal 1 is used as an example, but is not limited thereto. Embodiments can also be implemented using a mobile terminal such as a smartphone, or a tablet.

### (Other Embodiments)

The handy terminal 1 may be realized by a single device as described above or a plurality of devices having distributed functions.

The above-described embodiments may be applied to a method executed by an apparatus. The above-described embodiments may be applied to a program capable of causing a computer of a device to execute the functions described above. The above-described embodiments may be applied to a non-transitory computer-readable recording medium that stores a program.

As described above, the processing circuit 10 performs one or more processes. When the processing circuit 10 is composed of a single circuit, the single circuit performs all of the processes. When the processing circuit 10 is composed of a plurality of circuits, each of the plurality of circuits executes a part of the processes. When the processing circuit 10 is composed of a plurality of circuits, the plurality of circuits may be included in one device or may be distributed among a plurality of devices.

The program may be transferred in a state of being stored in the handy terminal 1, or may be transferred in a state of not being stored therein. In the latter instance, the program may be transferred over a network. Alternatively, it may be transferred as recorded in a recording medium. The recording medium is a non-transitory tangible medium. The recording medium is a computer-readable medium. The recording medium may be any form as long as it can store a program such as a CD-ROM or a memory card and can be read by a computer.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the gist of the disclosure. The accompanying claims are intended to cover such forms or modifications as would fall within the scope of the disclosure.

## Claims

1. A mobile terminal for obtaining and temporarily storing information about an item to be purchased before the item is registered using a point of sale (POS) terminal, the mobile terminal comprising:
a memory;
a scanner;
a display;
a printer; and
a processor configured to:
control the scanner to scan a first symbol and obtain an item code from the first symbol,
store, in the memory, item information indicating an item corresponding to the obtained item code,
generate a second symbol indicating the stored item information and readable by the POS terminal for registering the item, and
control the display or the printer to output the second symbol.

2. The mobile terminal according to claim 1, wherein the processor is configured to delete the item information stored in the memory after the second symbol is output.

3. The mobile terminal according to claim 1 or 2, further comprising:
an input device, wherein
the processor generates the second symbol upon input of a user operation via the input device.

4. The mobile terminal according to any one of claims 1 to 3, wherein the processor is configured to perform a payment process based on the item information stored in the memory.

5. The mobile terminal according to claim 4, wherein the processor is configured to, after the payment process is performed, control the printer to print a receipt showing the second symbol.

6. The mobile terminal according to claim 5, wherein the receipt shows information that identifies the mobile terminal.

7. The mobile terminal according to any one of claims 1 to 6, wherein the second symbol is a two-dimensional code.

8. A method performed by a mobile terminal for obtaining and temporarily storing information about an item to be purchased before the item is registered using a point of sale (POS) terminal, the method comprising:
scanning a first symbol and obtaining an item code from the first symbol;
storing, in a memory, item information indicating an item corresponding to the obtained item code;
generating a second symbol indicating the stored item information and readable by the POS terminal for registering the item; and
outputting the second symbol on a display or from a printer.

9. The method according to claim 8, further comprising:
deleting the item information stored in the memory after the second symbol is output.

10. The method according to claim 8 or 9, wherein the second symbol is generated upon input of a user operation.

11. The method according to any one of claims 8 to 10, further comprising:
performing a payment process based on the item information stored in the memory.

12. The method according to claim 11, further comprising:
after the payment process is performed, printing a receipt showing the second symbol.

13. The method according to claim 12, wherein the receipt shows information that identifies the mobile terminal.

14. The method according to any one of claims 8 to 13, wherein the second symbol is a two-dimensional code.

15. A non-transitory computer readable medium storing a program causing a computer to execute a method for obtaining and temporarily storing information about an item to be purchased before the item is registered using a point of sale (POS) terminal, the method comprising:
scanning a first symbol and obtaining an item code from the first symbol;
storing, in a memory, item information indicating an item corresponding to the obtained item code;
generating a second symbol indicating the stored item information and readable by the POS terminal for registering the item; and
outputting the second symbol on a display or from a printer.
